# EUROPEAN PATENT SPECIFICATION

(11) **EP 0 541 278 B1**
(45) Date of publication and mention of the grant of the patent: **22.07.1998**
(21) Application number: 92309754.7
(22) Date of filing: 23.10.1992
(51) Int. Cl.: B67D 5/02, B67D 5/54

(54) **Method of transferring fluid by means of compressed gas**
Verfahren zum Fördern von Fluidum mittels Druckluft
Procédé de transfert de fluide à l'aide de gaz comprimé

(30) Priority: 25.10.1991 JP 280118/91
(43) Date of publication of application: 12.05.1993
(73) Proprietor: MORI-GUMI CO. LTD., Osaka 541 (JP); TAGUCHI, Akira, Osaka 577 (JP)
(72) Inventor: Taguchi, Akira, Higashiosaka-shi, Osaka 577 (JP)
(74) Representative: Blanco White, Henry Nicholas

(56) References cited:
- EP-A- 0 394 466

## Description

This invention relates to a method of transferring material with compressed gas, and more particularly to a method of transferring various kinds of material highly effectively, to many locations and distant locations over a wide area, by pressure utilizing compressed gas as a transferring medium repeatedly and continuously. When the specific gravity of such compressed gas is equal that of to air or the like, gravity problems can be ignored within 1,000m above the ground in the atmosphere and the air pressure is wave motion traveling at the velocity of 340m per second. Accordingly, such natural conditions can be utilized as active power for transferring material.

Conventionally, pumps have been used to transfer liquid materials by pressure, but their applicability is rather limited to each specific purpose; they are expensive; the distance over which they can transfer material is short. Particularly in the case of liquids which contain highly viscous or solid substances, mechanical durability is low because the structure of the pump allows viscous or solid substances to enter its mechanism, which leads to frequent repairs and replacements of components caused by breakdown and wear and many pumps are inevitably required depending on each specific purpose. Thus pumps are not necessarily enough to transfer material by pressure to specific higher locations or distant locations. Furthermore, the energy used in the form of active power for transferring material can not be retained. As soon as transfer is completed, the energy becomes dissipated. In order to continue further transfer, it is necessary to supply new active power for it. Naturally, as far as pumps are applied to transferring material by pressure under the present pump mechanism, the active power can not be retained for further repeated and continuous use. In addition, there have been provided no complete measures to prevent freezing of pumps and pipes in winter, because of the excessive costs involved.

In the circumstances, the inventor has provided a method of transferring material including Atmospheric Pressure Operation, Natural Pressure Operation, Added Pressure Operation, Alternate Added Pressure Operation, and Continuous Added Pressure Operation in the International Publication No. WO 90/03322.

Atmospheric Pressure Operation is a method wherein the air in the atmosphere is compressed for the use of transfer operation as active power. For example, a pressure tank with the capacity of 1m³ is placed on the ground and filled with water. An empty tank with the capacity of 1m³ is Placed at a level of 100m above the first tank and connected to it with a pipe. When a compressor takes air from the atmosphere to compress it and delivers the compressed air continuously into the first tank with a gauge pressure somewhat higher than 10 atm, the water in the first tank gradually flows into the second tank. As a result, the first tank is filled with 1m³ of compressed air with a gauge pressure somewhat higher than 10 atm, and the second tank is filled with 1m³ of water. By electronically sensing this instant, a valve at the bottom of the first tank is closed, so that all of the compressed air can be retained without dispersion. Namely, in Atmospheric Pressure Operation, water is pushed up by air as a medium of transfer to the level of 100m above the first tank, and then the active power used for transfer is retained as a replacement for the material (water) in the first tank, i.e., the location from which the material has been transferred.

Natural Pressure Operation is defined as an operation where the compressed air as active power retained in a pressure tank works in itself, merely through opening and closing of the valves of a pressure tank, without consuming any other energy such as operation power required on actuating general machines. For example, when the 1m³ of compressed air having a atm gauge pressure of a little higher than 10 atm, retained in the first tank in accordance with Atmospheric Pressure Operation, is sent to the second tank filled with 1m³ of water 100m above the ground, the total volume of 1m³ water in the second tank can be pushed up to a third tank 45m above in accordance with Natural Pressure Operation. In this case, the first tank and the second tank each possess 4.5 atm gauge pressure of compressed air retained after the first transfer process. If the total volume of 2m³ of compressed air with 4.5 atm gauge pressure is pushed up in accordance with Natural Pressure Operation to the third tank, 1m³ of water in the third tank is pushed up to a fourth tank with the capacity of 1m³ 26.6m above. Thus, if the above method using the tank capacity of 1m³ is used in successive Natural Pressure Operation, the total transfer height that this operation can achieve is 122.19m. When precisely calculated using integral calculus, 1m³ of water can be pushed up to the height of 164m in accordance with Natural Pressure Operation. Namely, it is proven that the active power of the compressed air required for transferring 1m³ of water to the height of 100m in Atmospheric Pressure Operation is equal to that which can push the water up to the height of 164m.

Added Pressure Operation is a method wherein compressed air is taken and compressed by a compressor for use in a transfer operation. The operation in which compressed air retained as an energy source after Atmospheric Pressure Operation is taken and compressed by a compressor, and the operation which utilizes compressed air retained in a receiver tank, can both be called Added Pressure Operation.

For example, under the condition that 1m³ of water in the first tank on the ground is pushed up to the second tank 100m above the ground in accordance with Atmospheric Pressure Operation, the compressed air having a gauge pressure of a little higher than 10 atm retained in the first tank is taken and compressed to be pushed up to a third tank set 100m above the second tank by a compressor. At the stage that the water in the second tank is almost sent up to the third tank with exception of a little water remaining inside the second tank, the pressure of the first tank drops to zero atm gauge pressure, i.e., to the level of the atmosphere. Theoretically, it is possible that the air in the first tank is taken and pushed up into the second tank by further operating the compressor until the gauge pressure inside the tank becomes negative (partial vacuum). By doing so, all of the remaining water in the second tank is pushed up into the third tank. But the efficiency is badly reduced when a compressor is used in negative pressure. Instead, therefore, by electronically sensing the instant the pressure inside the first tank drops to atm gauge pressure zero or to the level of atmosphere, the little water remained in the second tank is pushed up to the third tank in Atmospheric Pressure Operation. Namely, in this case, both Added Pressure Operation and Atmospheric Pressure Operation are used. As this alternative, by electronically sensing the instant the pressure of the first tank drops to the level of the atmosphere, the valve at the bottom of the first tank is opened. Through said valve, supplement water flows into the first tank, whereby preparing supplement water while conducting Atmospheric Pressure Operation is possible. Needless to say, only Added Pressure Operation enables the transfer of water utilizing the compressed air retained in a receiver tank.

Alternate Added Pressure Operation is a method wherein material is transferred to a next step tank continuously in Added Pressure Operation by alternate replacement of compressed air and material in a plurality of tanks.

For example, two tanks are set in parallel. The first tank is filled with compressed air and the second tank having the same capacity as the first tank is filled with water. First, the compressed air in the first tank is made to act against the water in the second tank by a compressor. Then the water in the second tank is sent to a next step. When the transfer is completed, the first tank is filled with water. Next, the compressed air retained in the second tank made to act against the water in the first tank. Thus by alternately transferring the material in the first tank and the second tank in Added Pressure Operation, a continuous transfer into subsequent stages can be made. In this case, also, by utilizing the compressed air prepared in a receiver tank, the whole process of transfer can be conducted in Added Pressure Operation. Continuous Added Pressure Operation is available for further stages, provided that a plurality of tanks are set in parallel at each stage so as to be used in Alternate Added Pressure Operation.

In methods of transferring material with compressed gas, Added Pressure Operation and practical types thereof such as Alternate Added Pressure Operation and Continuous Added Pressure Operation are superior in that the energy used for transfer action can be retained and used for further transfer repeatedly and continuously, as compared to mechanical transfer methods such as pumps. However, when transferring the whole amount of the material, after completion of Added Pressure Operation, it is required thereafter to apply Atmospheric Pressure Operation, or to let the remaining material flow in under a little negative pressure, or to conduct Added Pressure Operation utilizing compressed air retained in a receiver tank prior to the operation. If none of these methods is adopted, then it is required that air is taken by a compressor until the pressure inside a tank passes from zero gauge to a partial vacuum.

It is therefore an object of the present invention to provide a transfer method comprising two cycle systems of perfect closed type in which compressed air as active power is entrapped, one cycle for Alternate Added Pressure Operation conducting continuous transfer, the other cycle for supplement of transferred material. Further, as for supplement, the present invention provides a continuous supplement method wherein material is taken continuously from outside into the closed cycle utilising the pressure difference of the compressed air as a medium of transfer so as to make possible a more efficient continuous transfer method.

The invention provides a method of transferring material utilising air as a transferring medium, comprising the repeated steps of:
transferring material from a first pressure tank by the pressure of compressed air;
retaining the compressed air in the said first pressure tank as a replacement for the material transferred;
taking the compressed air retained after the said one transfer step from the said first pressure tank and, while doing so, introducing further material, to be transferred in a later transfer step, into the said first pressure tank; and
introducing the retained compressed air from the first pressure tank as the transferring medium into a second pressure tank containing material to be transferred in the next transfer step, the pressure of the said retained compressed air acting on the medium to be transferred and the internal energy of the compressed air providing energy for the next transfer step;
   wherein the said further material is introduced into the said first pressure tank from a third pressure tank by the pressure of compressed air.

By adopting the above method, the method fo transferring material with compressed gas becomes more paractical and thematerial can be transferred continuously and more effectively. The material is also supplemented continuously, so that the effectiveness of the method is increased.

### BRIEF DESCRIPTION OF THE DRAWINGS

Figure 1 illustrates one embodiment of the transfer method in accordance with the present invention;
Figure 2 illustrates one embodiment of the transfer method 2 in accordance with the present invention;
Figure 3 illustrates one embodiment of the transfer method 3 in accordance with the present invention; and
Figure 4 illustrates one embodiment of the transfer method 4 in accordance with the present invention.

### DESCRIPTION OF THE PREFERRED EMBODIMENTS

A method of transferring a fixed volume of water continuously controlling the air pressure and the volume of water by utilizing instruments and sensors is explained as follows. For better understanding, liquid of specific gravity 1.0 is used as the material being transferred. As for the compressed gas, air is used.

### Method 1

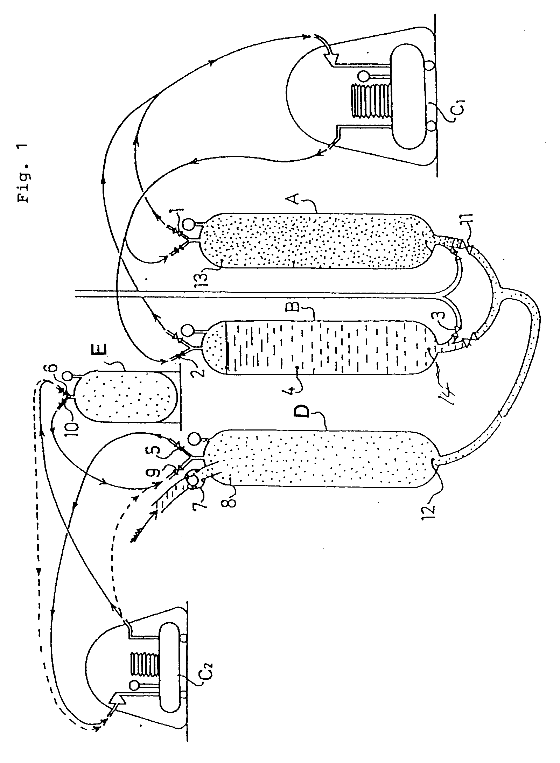

The transfer is conducted in Alternate Added Pressure Operation. The supplement of the material for continuous transfer is conducted in Natural Pressure Operation or together with Added Pressure Operation. Now the method is explained according to the Figure 1.

Utilizing pressure tanks A and B, Alternate Added Pressure Operation is conducted with the compressed air of fixed gauge pressure. In order for the Alternate Added Pressure Operation to be conducted continuously with high effectiveness and strength, the supplement of material is conducted through pressure tanks D and E which are specially prepared. The material is pushed into the tanks A and B alternately from the tank D. As for the supplement, Natural Added Pressure Operation is conducted with the compressed air of the fixed gauge pressure between the tanks D and E. If necessary, Added Pressure Operation is used jointly. The process of supplement of material in Natural Pressure Operation or joint use with Added Pressure Operation strengthens the Alternate Added Pressure Operation between the tanks A and B, and besides high effectiveness of transfer is obtained.

### [Preparatory Stage]

The material (liquid of the specific gravity 1.0) is transferred continuously to a destination at a level of 100m above the location of the tanks A and B or to a destination 5,000m distant parallel to the ground with the compressed air of 11.0 atm gauge pressure in Alternate Added Pressure Operation between the tanks A and B. For smooth and highly effective continuous transfer, the supplement of material is conducted in Natural Pressure Operation with 8.33-2.5 atm gauge pressure, and Added Pressure Operation is jointly used, if necessary. In Figure 1, the tank A and the tank B are each of 1,100 liter capacity. The unit transfer of the material is 1,000 liter, so that even when the total amount of liquid is pushed into one of the tanks A and B, there still remains space of 100 liter in that tank. The capacity of the tank E is 500 liter.

The tank B is filled with 1,000 liter of water, and at the upper part of the tank in which 100 liter space remains, the compressed air of 2.0 atm gauge pressure is stored. The tank A, with the capacity of 1,100 liter, is filled with compressed air of 11.0 atm gauge pressure.

Considering the tank A and the tank B together as a single structure, the product PV has the constant value PV=13,500:
(Tank A): PV=(1+11) x 1,100 (1=atmospheric pressure)
(Tank B): PV=(1+2) x 100 (1=atmospheric pressure)$\text{(Tank A) + (Tank B) = 13,500}$

The tank D and the tank E are both filled with compressed air of 2.5 atm gauge pressure. Considering the tank D and the tank E together as a single structure, PV has the constant value PV=5,600:
(Tank D): PV= (1+2.5) x 1,100
(Tank E): PV= (1+2.5) x 500$\text{(Tank D) + (Tank E) = 5,600}$

The reason why 100 liters of space is preserved at the upper part of each tanks A, B, and D, is that by making allowance of 10% it is considered that full control can be exercised. If the control is conducted more precisely, then the space allowed can be decreased and the effectiveness of transfer becomes greater. All valves to be used are electric valves.

### [First Stage]

In the first step, Alternate Added Pressure is conducted between the tanks A and B by the compressor C1, while the compressor C2 also acts on the air in the tank D to draw up into the tank E. While a fixed volume of liquid, e.g., 337.5 liter of liquid is transferred from tank A or tank B to a destination, the air in the tank D is drawn up between the tank D and the tank E, and then the pressure inside of the tank D drops, whereby 1,000 liter of supplementary liquid fills the tank D. Thus the first step is completed.

Here, Alternate Added Pressure Operation conducted between the tank A and the tank B is explained. The valve 1 and the valve 2 of the tank B are opened. The compressor C1 acts on the compressed air of 11.0 atm gauge pressure in the tank A to be pushed into the tank B. Then the valve 3 of the tank B is opened and the 1,000 liter of liquid is transferred to a destination.

As the liquid in the tank B is transferred to the destination, the level of the liquid comes down, so that the upper space of the tank B enlarges above 100 liter volume. The pressure of the upper space is initially 2.0 atm gauge pressure and then the pressure rises to 11.0 atm gauge pressure, while Added Pressure Operation is continued. On the other hand, 11.0 atm gauge pressure of the compressed air in the tank A gradually comes down as the liquid of the tank A is transferred into the tank B. Sensing by the level switch 4 at the tank B the instant when 337.5 liter of liquid out of the initial volume of 1,000 liter in the tank B has been transferred, or sensing by utilizing applicable control means the instant when pressure gauge at the tank A indicates 6.5 atm gauge pressure, the first stage is finished.

The PV value of Tank A + Tank B is;$\text{(1 + 6.5) x 1,100 + (1 + 11) x (100 + 337.5) = 13,500}$

According to Added Pressure Operation between the tanks A and B, 337.5 liter out of the 1,000 liter in the tank B transferred to the destination. Within the time the pressure inside the tank A drops to 6.5 atm gauge pressure, namely prior to the completion of the first stage, the following process, i.e., supplement of 1,000 liter liquid to fill the tank D is conducted. To do so, first the operation of having the tank E draw up the air in the tank D is conducted with the concurrence of Alternate Added Pressure Operation between the tanks A and B. In more detail, at the same time when Added Pressure Operation between the tanks A and B by the compressor C1 starts, the valve 5 of the tank D and the valve 6 of the tank E are opened. Then the compressor C2 operates to push up the compressed air of 2.5 atm gauge pressure in the tank D into the tank E. The pressure of the tank D drops rapidly. When the pressure from the outside caused by supplementary liquid, which is supported by the pressure valve 7, exceeds the pressure inside the tank D, the pressure valve 7 is pushed downward and the supplementary liquid flows into the tank D.

The compressor C2 continues to draw up the air inside the tank D, while the inflow of the supplementary liquid pushes up the air inside the tank D from the bottom to the upper portion. Accordingly, the operation of the compressor C2 for pushing the air in the tank D into the tank E becomes more and more effective.

Sensing by the level switch 8 the instant when 1,000 liter of supplementary liquid of the tank D starts to flow, the compressor C2 stops its operation. At the same time when the valve 5 and the valve 6 are closed, the valve 9 of the tank D and the valve 10 of the tank E are opened. Then the high pressure air in the tank E flows rapidly into the upper space of the tank D. Immediately, the pressure valve 7 is pushed upward, so that the inflow of supplementary liquid is prevented. As a result, the upper space with 100 liter volume of the tank D and the tank E are both filled with compressed air having 8.33 atm gauge pressure. If necessary from the viewpoint of control, pressure gauges of the tank D and the tank E may sense the instant.

The PV value of Tank D + Tank E is;
PV = 5,600 (unchanged)$\text{(1 + Pcdx) x 100 + (1 + Pcdx) x 500 = 5,600}$
Pcdx = 8.33 atm gauge pressure

### [Second Stage]

1,000 liter of supplementary liquid is already prepared in the tank D, the upper space of which is pressurised at 8.33 atm gauge pressure. The liquid of 337.5 liter in the tank B belonging to Added Pressure system is transferred to the destination, and, in the tank A, the initial 11.0 atm gauge pressure due to Added Pressure Operation drops to 6.5 atm gauge pressure. When that instant is sensed, the valve 11 at the bottom of the tank A is opened. The supplementary liquid in the tank D is pushed strongly into the tank A through the bottom of the tank A by the compressed air of 8.33 atm gauge pressure which is preserved in the upper space of 100 liter volume in the tank D and in the tank E with the capacity of 500 liter volume. It is, of course, possible to transfer the liquid in the tank B to a destination only in Alternate Added Pressure Operation between the tanks A and B. To accelerate the operation speed thereof, however, the supplementary liquid is used, pushing up with 8.33 atm gauge pressure through the valve 11 at the bottom of the tank A on the compressed air in the tank A when the pressure of the latter falls below 6.5 atm gauge.

Natural Pressure Operation between the tanks D and E for pushing up the supplementary liquid to the tank A is explained. The initial 8.33 atm gauge pressure in the tanks D and E decreases as the 1,000 liter supplementary liquid in the tank D is pushed up into the tank A through the valve 11. At the point that 1,000 liter of supplementary liquid is all pushed up and the tank becomes empty, the pressure of the tanks D and E drops to 2.5 atm gauge pressure. The instant can be sensed by the level switch 12 at the tank D and the level switch 13 at the tank A. Pressure gauges at the tanks D and E also can sense that instant. By sensing the instant, the valve 11 at the tank A is closed. The pressure change with respect to the tanks D and E is as follows.

The initial PV value of Tank D + Tank E is;
PV = 5,600 (unchanged)$\text{(1 + Pcdx) x 100 + (1 + Pcdx) x 500 = 5,600}$
Pcdx = 8.33 atm gauge pressure

The final PV value of Tank D + Tank E is;
PV = 5,600 (unchanged)$\text{(1 + Pcdy) x 1,100 + (1 + Pcdy) x 500 = 5,600}$
Pcdy = 2.5 atm gauge pressure

Accordingly, by Natural Pressure Operation between the tanks D and E, 1,000 liter of supplementary liquid is pushed up into the tank A initially with 8.33 atm gauge pressure and finally with 2.5 atm gauge pressure.

On the other hand, the efficiency of Alternate Added Pressure Operation between the tanks A and B is improved by the supplement of the supplementary liquid conducted in Natural Added Pressure Operation between the tanks D and E, so that 662.5 liter of liquid left in the tank B is pushed up to a destination with an accelerated speed. The level switch at the tank B senses that instant and the valve 3 at the tank B is closed. It is needless to say that the pressure inside the tank B is 11.0 atm gauge pressure, since Added Pressure Operation with 11.0 atm gauge pressure has been completed.

The tank A is filled with 1,000 liter of supplementary liquid, and, at the upper portion thereof, the space with the capacity of 100 liter is at 2.0 atm gauge pressure. The PV value of the tanks A and B is;
PV = 13,500 (unchanged)$\text{(1 + Pcdz) x 100 + (1 + 11) x 1,100 = 13,500}$
Pcdz = 2.0 atm gauge pressure

Accordingly, it is clear, in this second stage, that Natural Pressure Operation between the tanks D and E supports the Alternate Added Pressure Operation between the tanks A and B, initially with (8.33 - 6.5) = 1.83 atm pressure difference and finally with (2.5 - 2.0) = 0.5 atm pressure difference.

Consequently, the tank A is filled with 1,000 liter of liquid material, and the upper space with the capacity of 100 liter, is filled with compressed air at 2.0 atm gauge pressure. And the tank B is filled with compressed air with 11.0 atm gauge pressure. Both the tank D and the tank E are filled with compressed air at 2.5 atm gauge pressure. This indicates that the contents of the tanks A and B in the preparatory stage have been completely replaced with each other. The tanks A and B have pipes for conducting Added Pressure Operation at the stage when the above replacement is completed. Valves and level switches are also provided. Accordingly, by such process in repetition, Alternate Pressure Operation between the tanks A and B is conducted, while the supplementary liquid is transferred in Natural Pressure Operation between the tanks D and E. Thus, such continuous operation can be conducted with high efficiency.

In this case as above, Added Pressure Operation between the tanks D and E is also possible. The process until the first stage is the same. In the second stage, however, if the pipe connected between the valve 9 at the tank D and the valve 10 at the tank E is sufficiently large and in addition Natural Pressure Operation can fully conduct the process, without the need of the compressor C2, arranged for supporting the Added Pressure Operation between the tanks A and B, then there is no need to adopt such Added Pressure Operation. Therefore the adoption of Added Pressure Operation depends on the kinds and properties of liquid material or on the need of more efficiency.

Provided Added Pressure Operation between the tanks D and E is adopted, then the piping is as illustrated in Figure 1 by dotted line. The valve 10 is closed on the way of conducting Natural Pressure Operation between the tanks D and E. The compressed air in the tank E is pushed strongly into the tank D, through the compressor C2, from the opened valve 6 to the valve 9 at the tank D. The gauge pressure of the tank E drops further, and in inverse proportion thereto the gauge pressure of the tank D rises, thus Added Pressure Operation between the tanks A and B is accelerated. The operation of the tank E at negative gauge pressure would decrease the operation efficiency, so that the pressure of the tank E is controlled to drop to the atmospheric level. In the case of Natural Pressure Operation between the tanks D and E, the Alternate Added Pressure Operation between the tanks A and B is supported initially with 1.83 atm pressure difference and finally with 0.5. atm pressure difference.

On the other hand, in the case of Added Pressure Operation between the tanks D and E, the initial pressure difference supporting the Alternate Pressure Operation between the tanks A and B is 1.83 atm. as in the case of Natural Pressure Operation between the tanks D and E, but the final pressure difference rises up to (3.64 - 2.0) = 1.64 atm. As a result, it is possible that Added Pressure Operation can support the Alternate Added Pressure Operation with 2.0 atm pressure difference or less consistently. The final PV value of Tank D + Tank E is;
PV = 5,600 (unchanged)$\text{(1 + Pcz) x 1,100 + (1 + 0) x 500 = 5,600}$
Pressure of the tank D: Pcz = 3.64 atm gauge pressure

### Method 2

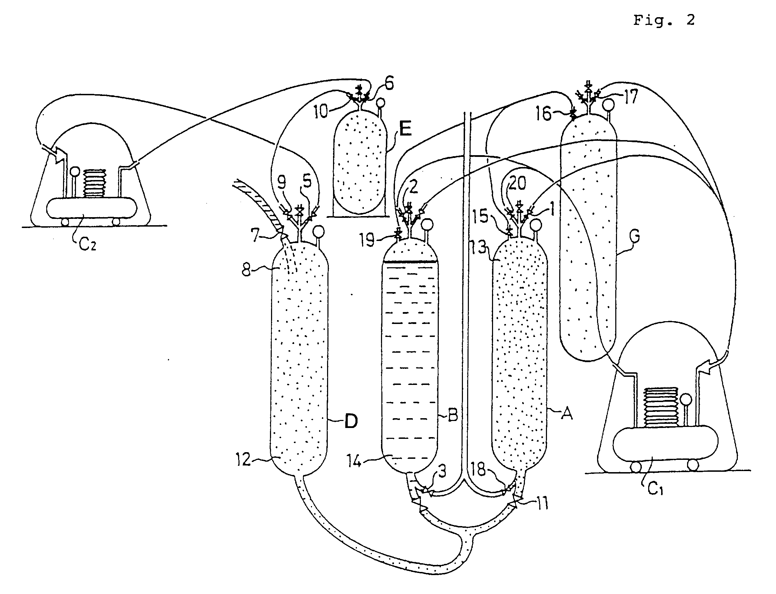

The present method applies a receiver tank G to Alternate Added Pressure Operation between the tanks A and B. Now the method is explained according to the Figure 2.

The compressor used in the above Method 1 is a booster compressor which draws up compressed air discharge it as well as the atmospheric air. Both the inlet pressure and the discharge pressure of said booster compressor are controlled to be 11.0 atm gauge pressure in Method 1. However, in actuality, the discharge pressure of the booster compressor is 10.0 atm gauge pressure at maximum, the inlet pressure is lower than that of the discharge pressure. For example, in general, the inlet pressure of a booster compressor is 6.0 atm gauge pressure. In the present method, the booster compressor C1 has the inlet pressure 6.0 atm gauge pressure at maximum and the discharge pressure of 10.0 atm gauge pressure at maximum.

### [Preparatory Stage]

The tank A with a capacity of 600 liter is filled with compressed air of 10.0 atm gauge pressure. The tank B having the same capacity as the tank A is filled with 550 liter of liquid, and in its upper portion compressed air of 1.0 atm gauge pressure is preserved. The receiver tank G with the capacity of 600 liter is filled with compressed air of 1.0 atm gauge pressure. Considering the tanks A, B and G as a single structure, PV is constant at 7,900:
(Tank A) PV = (1 + 10) x 600
(Tank B) PV = (1 + 1) x 50
(Tank G) PV = (1 + 1) x 600$\text{(Tank A) + (Tank B) + (Tank G) = 7,900}$

As for the tank D with the capacity of 600 liter and the tank E with the capacity of 400 liter, provided both the tanks D and E are filled with compressed air of 2.5 atm gauge pressure, PV is constant at 3,500:
(Tank D) PV = (1 + 2.5) x 600
(Tank E) PV = (1 + 2.5) x 400$\text{(Tank D) + (Tank E) = 3,500}$

### [First Stage]

In this first stage, the valve 15 of the tank A and the valve 16 of the tank G are opened, so that the tank A and the tank G are connected. Then the valve 17 of the tank G and the valve 2 of the tank B are opened. Through the compressor C1, the compressed air in the tank B is drawn up to act on the upper space of 50 liter in the tank B for transfer, while the compressor C2 is also actuated, and the compressed air with 2.5 atm gauge pressure in the tank D is drawn up into the tank E. First, Alternate Added Pressure Operation between the tanks A and B is explained.

The compressor C1 draws up the compressed air with 1.0 atm gauge pressure in the tank G. The compressed air with 10.0 atm gauge pressure the tank A flows into the tank G, so that the pressure inside the tank G rises within a range not exceeding 5.5. atm gauge pressure. On the other hand, the pressure inside the tank A also drops rapidly. At the moment the gauge pressure indicates 5.5 atm. gauge pressure, the valves 15 and 16, which connect the tank A and G, are closed. The valve 1 at the tank A is opened, and the compressed air in the tanks A and G, both of which are below 5.5 atm gauge pressure, is pushed into the tank B in Added Pressure Operation. The pressure of the compressed air, initially at 1.0 atm gauge pressure, in the upper portion in the tank B rises rapidly. When that pressure exceeds 9.0 atm gauge pressure, the valve 3 at the bottom of the tank B is opened, and 550 liter of liquid is pushed to a destination with 10.0 atm gauge pressure at maximum. In the present method, there is no need to sense the inflow of 337.5 liter which was a cue for control of the supplementary liquid supply in method 1.

Alternate Added Pressure Operation between the tank A and the tanks G and B actuates, and at the same time the supplement of supplementary liquid starts. Now the process of the supplement is explained.

First, the valve 5 at the tank D and the valve 6 at the tank E are opened. The compressor C2 actuates to push up the compressed air of 2.5 atm gauge pressure in the tank D into the tank E. The pressure inside the tank D drops rapidly. When the pressure at the tank D is 0.2 atm gauge pressure, the valve 7 of the tank D is opened, and supplementary liquid flows into the tank D. As soon as the level switch 8 senses that 550 liter of supplementary liquid has flowed into the tank D, the valve 7 is closed and the operation of the compressor C2 ceases. Then the valves 5 and 6 are closed, and the valve 9 at the tank D and the valve 10 at the tank E are opened. The high pressure air in the tank E flows into the upper portion of the tank D. At this point, the upper portion with the capacity of 50 liter in the tank D and the whole of tank E are both filled with compressed air with 6.78 atm. gauge pressure.
(Tank D) PV = (1 + Pcdx) x 50
(Tank E) PV = (1 + Pcdx) x 400$\text{(Tank D) + (Tank E) = 3,500}$
Pcdx = 6.78

Immediately after the pressure gauge at the tank D senses that instant, the valve 11 at the bottom of the tank A is opened, and supplementary liquid flows into the tank A through its bottom. In the case of Alternate Added Pressure Operation between the tank A and the tanks G and B, the initial gauge pressure of the tank A as a drawing up tank and the inlet pressure from the tank G are both 5.5 atm gauge pressure. Accordingly, at the time when supplementary liquid of 550 liter flows with 6.78 atm gauge pressure from the tank D, the pressure of both of the tanks A and G drops below 5.5 atm gauge pressure within a proper range. Then a supplement process operates to promote the Alternate Added Pressure Operation between the tank A and the tanks G and B. At the point that supplementary liquid rises up and the amount reaches 550 liter, the level switch 14 senses that instant, and the valve 3 at the tank B is closed, while the valve 18 at the bottom of the tank A is opened. At this point, the air pressures in the upper portion with the capacity of 500 liter of the tank A and in the tank G are both 1.0 atm gauge pressure. Thus, the first stage is completed and the second stage starts. At the point when the first stage is completed the contents of the tanks A and B in the preparatory stage are interchanged. Nothing has changed in other points.

### [Second Stage]

In this second stage, the valve 19 at the tank B and the valve 16 at the tank G are opened to connect the tank B and the tank G. The valve 17 at the tank G and the valve 20 at the tank A are opened. Through the compressor C1, the compressed air in the tank G is taken to act on the upper portion with the capacity of 50 liter in the tank A. While conducting Alternate Added Pressure Operation, the compressor C2 also operates as in the case of the first stage. Added Pressure Operation between the tanks D and E is also available.

### [Third Stage]

In this third stage, operations return to the first stage phase, and the aforesaid process are repeated continuously for transfer.

It is noted that the valve disposed at the intermediate point of the top of each tank is an inlet valve, which is used when a fixed pressure drops down due to, e.g., blow-by.

### Method 3

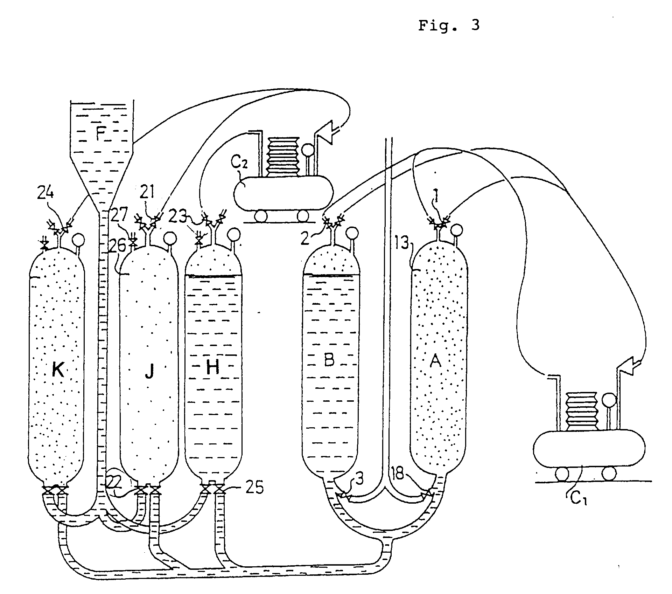

In this method, both transfer and supplement are conducted in Alternate Added Pressure Operation. Now this method is explained according to Figure 3 as follows.

Supplement in Alternate Added pressure Operation can be conducted with the same method as in the above method of transferring between the tanks A and B. But, here, a transformed Alternate Added Pressure Operation utilizing the three tanks H, J and K is explained.

### [Preparation Stage]

The material (liquid of the specific gravity 1.0) is transferred continuously to a destination at a level of 100m above the tanks A and B or to a place 10,000m distant parallel to the ground with compressed air of 1.0 atm gauge pressure in Alternate Added Pressure Operation between the tank A and B. To conduct a continuous transfer smoothly and high effectively, the supplement of the material is conducted with atm gauge pressure 11.0 in a transformed Alternate Added Pressure Operation between the tanks H, J and K.

All the tanks A, B, H, J, and K have the capacity of 1,100 liter respectively. The unit of the transfer is to be 1,000 liter, so that at the upper portion of each tank a space with the capacity of 100 liter remains even when the tank is full of liquid. The tank B is filled with 1,000 liter of liquid. At the upper portion thereof, there remains compressed air of 2.0 atm gauge pressure. The tank A with the capacity of 1,000 liter is filled with compressed air of 11.0 atm gauge pressure. The PV constant of Tank A + Tank B is 13,500.

The tank H is filled with 1,000 liter of liquid, and at the upper Portion thereof, there remains space at atmospheric pressure, i.e., at zero gauge pressure. The tank J is filled with compressed air at atmospheric pressure, and the tank K is filled with compressed air at 11.0 atm gauge pressure. The piping from the tank F to the bottom of each tanks H, J and K is arranged for supplementing of liquid.

### [First Stage]

In this first stage, Alternate Added Pressure Operation between the tanks A and B utilizing the compressor C1, and, at the same time, the compressor C2 also actuates to supplement 1,000 liter of liquid to the tank A in Added Pressure Operation and also to supply supplementary liquid from the tank F to the tank J.

First, Alternate Added Pressure Operation between the tanks A and B is explained. As explained previously, the valve 1 at the tank A and the valve 2 at the tank B are opened. Utilizing the compressor C1, the compressed air with 11.0 atm gauge pressure in the tank A is pushed up into the tank B. The valve 3 at the bottom of the tank B is opened and 1,000 liter of liquid is transferred to a transfer place in Added Pressure Operation. Each of the tanks A and B has its level switch for measuring the upper bound, but there is no level switch equipped for measuring the lower bound nor the level of 337.5 liter in the intermediate course of the transfer. Namely, the inflow amount of 337.5 is not sensed, and the total amount of 1,000 liter is transferred in the first stage. Next, the process of supplementing supplementary liquid between the tanks H, J and K, which is conducted at the same time of the Alternate Added Pressure Operation between the tanks A and B, is explained.

Alternate Added Pressure Operation between the tanks A and B starts, and, at the same time, the valve 21 and 22 at the tank J and the valve 23 at the tank H are opened and the compressor C2 starts to operate. The supplementary liquid in the tank F flows easily by natural flow. But, since the valve 21 at the tank J is opened and the compressed air of atmospheric pressure in the tank J is pushed up, through the compressor C2, into the upper portion of 100 liter space in the tank H, the pressure of the small upper space rises rapidly from atmospheric air pressure to be 10.0 atm gauge pressure. Sensing that instant, the valve 21 at the tank J is closed and the valve 24 at the tank K is opened. The compressor C2 acts on the compressed air of 11.0 atm gauge pressure in the tank K to push up into the tank H, and at the same time, the valve 25 at the bottom of the tank H is opened to transfer the supplementary liquid to the tank A in Added Pressure Operation.

A chain of process is explained by each tank. First, the valve 21 at the tank J is opened. Through the compressor C2, the air of atmospheric pressure in the tank J is pushed into the upper portion of the tank H. The pressure of the tank J is to become negative, but, as the valve 22 at the bottom of the tank J is opened at the moment the valve 21 is opened, the supplementary liquid in the tank F flows by natural flow into the tank J, through the bottom, thereby pushing up the air above. Then the air pushed up is pushed up, through the compressor C2, into the upper portion of the tank H. As a result, the inflow speed of the supplementary liquid is quite rapid. Before the succeeding Added Pressure Operation between the tanks H and K starts, 1,000 liter of supplementary liquid flows into the tank J. Depending on the kinds of supplementary liquids, e.g., in the case of high viscous substances which will delay the inflow speed, it is necessary to promote the inflow speed by pressurizing the upper portion of the tank F. Sensing the instant the upper space of the tank H reaches 10.0atm gauge pressure by the pressure of the air with atmospheric pressure in the tank J, the valve 21 at the tank J is closed. If there occurs no blow-by, at that point, 1,000 liter of supplementary liquid flows into the tank J, and the upper bound level at the tank J senses that instant. At that time, the upper space with the capacity of 100 liter in the tank J is to become atmospheric pressure. But, if the pressure gauge at the tank J senses that the upper portion is slightly negative due to blow-by etc., the valve 27 at the tank J is opened to draw up the atmosphere. When the pressure gauge senses the atmospheric pressure, the valve 27 is closed. At this point, the phase of the tank J is same with the tank H in the preparatory stage.

As for the tank H, when the air of atmospheric pressure in the tank J is pushed up, through the compressor C2 into the tank H from the valve 23, the pressure of the upper space of the tank H rises up rapidly. And at the moment the pressure gauge senses 10.0 atm gauge pressure, the valve 21 at the tank J is closed, and the valve 24 at the tank K and the valve 25 at the tank H are opened so as to transfer the compressed air of 11.0 atm gauge pressure in the tank K in Added Pressure Operation.

As for the tank K, the compressed air of 11.0 atm gauge pressure in the tank K is transferred in Added Pressure Operation, through the compressor C2, from the valve 24 at the tank K to the valve 23 at the tank H, to act on 1,000 liter liquid in the tank H. Since the upper space with the capacity of 100 liter has already become 10.0 atm gauge pressure and the valve 25 is opened, the supplementary liquid flows, with gauge pressure exceeding the air pressure inside the tank A, into the tank A through the bottom of the tank A. At this point, let us check the progress regarding Alternate Added Pressure Operation between the tanks A and B.

The upper space with the capacity of 100 liter in the tank B initially contains compressed air at 2.0 atm gauge pressure. Then the compressed air of 11.0 atm gauge in the tank A flows in, and the pressure of the upper space rises immediately up to 11.0 atm gauge pressure. 1,000 liter of liquid is transferred to a destination through the valve 3. In proportion to the volume of the transferred liquid, the pressure inside the tank A drops down from 11.0 atm gauge pressure, and the speed of Added Pressure Operation decreases according to the falling air pressure. To avoid this, supplementary liquid is pushed up, with the gauge pressure not below 11.0 atm, from the bottom of the tank A in order to support Added Pressure Operation between the tanks A and B. This resembles the following. Namely, passenger cars A and B full of passengers ascend a slope with full rotation of engine, while passenger cars H and K with no passengers, having more efficiency, support the above A and B with full rotation of engine.

As in the case of the tanks D and E in Methods 1 and 2, the tanks H, J and K in this method can be regarded perfectly as a closed cycle. Namely, in the first stage, the tank J is full of air at atmospheric pressure, and then the tank J succeeds, under atmospheric pressure or full of the atmospheric air, the phase of the tank H in the preparatory stage. Thus, there is no difference with the phase conversion within a closed cycle.

When the upper bound level switch 12 at the tank A senses the instant the total volume of 1,000 liter in the tank H is supplemented to the tank A, the valve 25 at the tank H is closed. At that point, the tank H is filled with compressed air of 11.0 atm gauge pressure, and the pressure of the tank K drops to atmospheric pressure. And the tank A is filled with 1,000 liter of liquid and the upper space thereof with the capacity of 100 liter is pressurized by compressed air of 2.0 atm gauge pressure. The tank B is filled with compressed air of 11.0 atm gauge pressure. This means that the contents of the tanks A and B in the preparatory stage are replaced with each other. Likewise, replacements between the tanks H, J and K; the tank H is replaced with the tank K, and the tank H is filled with compressed air of 11.0 atm gauge pressure; the tank J is replaced with the tank H, and the tank J is filled with 1,000 liter of liquid with exception of the upper space with the capacity of 100 liter; and the tank K is replaced with the tank J, and the tank K is filled with atmospheric air.

The second stage is conducted under the replaced phase, and the process is the same with the first stage. When the second stage is completed, the operation process between the tanks A and B returns to the first stage. However, the operation process between the tanks H, J and K enter into the third stage, under such conditions: the tank H is filled with atmospheric air; the tank J is filled with compressed air of 11.0 atm gauge pressure; the tank K is filled with 1,000 liter of liquid, with exception of the upper space with the capacity of 100 liter. When the third stage is completed, the process at last returns to the conditions of the preparatory stage. The following fourth stage is continuously operated under the same process as in the case of the first stage.

### Method 4

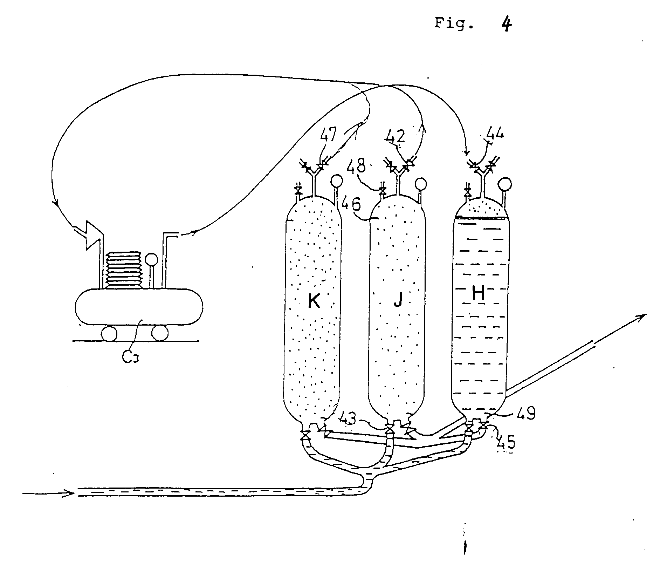

There are cases in which, after the completion of transfer of liquid material which include solid substances of high specific gravity or highly viscous liquids to a far distant destination, further transfer to a higher place or to a more distant place is needed, or in which the transferred liquid needs to be further transferred divergently to other places. This method may be applied to such cases. The process is explained according to Figure 4. Of course, any one of the aforesaid methods will be available, but, in this case, three tanks are utilized.

### [Preparatory Stage]

The liquid transferred in Alternate Added Pressure Operation from the tanks A and B, which are placed at the origin of transfer, is further transferred into the tank H from the arrow direction. The tank H is filled with 1,000 liter of liquid and at the upper portion, 100 liter of space is occupied with atmospheric air. The tank J is also filled with 1,100 liter of atmospheric air. The tank K with the capacity of 1,100 liter is filled with compressed air of 11.0 atm gauge pressure (if necessary, the pressure may be varied).

### [First stage]

The upper valve 42 and the lower valve 43 at the tank J, and the upper valve 44 and the lower valve 45 at the tank H are opened. Then the compressor C3 starts to operate. The liquid arriving in the arrow direction from the origin of transfer flows into the tank J through the opened valve 43 at the bottom of the tank J. On the other hand, the atmospheric air in the tank J is drawn up by the compressor C3 and pushed into the upper space of the tank H. Before the pressure inside of the tank J becomes negative, liquid is pushed up through the valve 43 at the bottom of the tank J in Atmospheric Pressure Operation between the tanks H and J with the efficiency nearly as in the case of Alternate Added Pressure Operation, so that the inside of the tank J is at atmospheric pressure or more. The 1,000 liter of liquid in the tank H is transferred, through the valve 43, to a next further destination or to a place from where the transferred liquid is distributed. In need of spreading the transferred liquid at the destination or the place of distribution, the valve 45 at the tank H is closed until the air pressure of the upper space in the tank H becomes 11.0 atm gauge pressure.

At the time the liquid pushed from the bottom of the tank J reaches the level of 1,000 liter, the level switch 46 senses that instant, and the valves 42 and 43 are closed. Then the valve 47 at the tank K is opened and compressed air of 11.0 atm gauge pressure is transferred to the tank H in Added Pressure Operation.

If air pressure of the upper space with the capacity of 100 liter in the tank J becomes negative, the valve 48 is opened until the upper space reaches atmospheric pressure.

Sensing the instant of the completion of transferring 1,000 liter of liquid in the tank H by the level switch 49 at the bottom of the tank H, the valve 45 is closed. At that point, if the pressure of the tank H does not reach gauge pressure 11.0, Alternate Added pressure Operation is conducted further until the pressure in the tank H reaches 11.0 atm gauge pressure. Such reduction of pressure may occurr in the tank H because the pressure of the compressed air used for Alternate Added Pressure Operation is higher than necessary. Accordingly, the initial gauge pressure of the tank K should be decreased to the level that is necessary and sufficient for transfer.

The first stage is completed through the above processes. The phase of the tank H is replaced with the tank K, and the phase of the tank K is replaced with the tank J. Then the second stage starts by repeating the same process, whereby transfer distance can be further extended and also the distribution of the material can be attained with high effectiveness.

The continuous operation in this method is conducted in two systems. The one system includes the tanks A and B or the tanks A, B and D, which are for transfer operation. The other system includes the tanks D and E or the tanks H, J and K, which are for continuous supplement. These tanks are controlled by computers such as micro computers or micro processors utilizing fuzzy function.

As for such particulars of the liquid material as the specific gravity, viscosity, the forms of substances included in the liquid and the content ratio thereof, values of friction and resistance etc. are calculated in accordance with hydrodynamics and experiments. After that, the values obtained are memorized in computers. When liquid flows into the supplement system, the sensor senses properties and forms of the liquid. According to the memories and operation of the computers, the pressure and the volume of transfer of each tank in the two systems are controlled to be best suited. The change of the volume of the treated liquid during the continuous operation in extended time is also able to be dealt with properly by utilizing software developed.

In this method, however, there still remains a problem of blow-by due to the compressor operation. The blow-by problem can be settled, provided a compressor is contained in a suitable pressure box and operated at the same pressure as that of Added Pressure Operation. But, for it, it is necessary to prepare a large-sized pressure box. Recently the faculties of compressors have become quite great, and as a result the amount of the blow-by is small. So, it seems more economical, by sensing the instant the amount of the blow-by reaches a fixed value, to supplement the loss instead of preparing a pressure box for containing a compressor.

On the contrary, however, when various kinds of liquid materials are transferred to higher places or far distant places by large-sized mechanisms, it may be thought that a plurality of large-sized compressors are contained in a large-sized pressure box of steel or in a hermetical RC or SRC structure box with high stability. The pressure inside the pressure box can be controlled by computers so as to eliminate blow-by, which is practically possible and economical.

Newtonian fluid and slurry of non-Newtonian fluid type as well may be transferred in this method. Solid substances included in the fluid are also acceptable for this method as long as the sizes of the solid substances are smaller than the diameters of valves and pipes. Accordingly, stirring is required for some kinds of liquid in transfer. As for stirring, said process is described in the aforesaid International Publication No. WO 90/03322 wherein compressed air is pushed, through a plurality of divergent pipes, from the bottom of a tank where stirring is conducted. Bubbles risen up from the bottom of the tank crush the precipitated or coagulated substances, then compressed air preserved at the upper portion of the tank push up the stirred liquid into an another pipe connected to the bottom of the tank.

## Claims

1. A method of transferring material utilizing air as a transferring medium, comprising the repeated steps of:
transferring material from a first pressure tank (A,B) by the pressure of compressed air;
retaining the compressed air in the said first pressure tank (A,B) as a replacement for the material transferred;
taking the compressed air retained after the said one transfer step from the said first pressure tank (A,B) and, while doing so, introducing further material, to be transferred in a later transfer step, into the said first pressure tank (A,B); and
introducing the retained compressed air from the first pressure tank (A,B) as the transferring medium into a second pressure tank (B,A) containing material to be transferred in the next transfer step, the pressure of the said retained compressed air acting on the medium to be transferred and the internal energy of the compressed air providing energy for the next transfer step;
wherein the said further material is introduced into the said first pressure tank (A) from a third pressure tank (D) by the pressure of compressed air.

2. A method according to claim 1, comprising the repeated step of transferring air from a third pressure tank (D) into a fourth pressure tank (E) in order to draw material into the third pressure tank (D), and transferring the air from the fourth pressure tank into the third pressure tank and thereby expelling the material from the third pressure tank (D) and introducing the material into the first or second pressure tank (A,B).

3. A method according to claim 1, wherein the first pressure tank (H) initially contains material to be transferred, the second pressure tank (J) initially contains air substantially at ambient pressure, and a further pressure tank (K) initially contains compressed air, the method comprising the cyclically repeated steps of:
introducing material into the second pressure tank (J) while compressing the air from that tank into the first pressure tank (H); and
transferring the material from the first pressure tank (H) by the pressure of the compressed air from the further pressure tank (K);
after which steps the second pressure tank (J) contains material to be transferred, the further pressure tank (K) contains air substantially at ambient pressure, and the first pressure tank (H) contains compressed air.

4. A method of transferring material, comprising transferring material from a first place to a second place by a method as claimed in claim 1 or claim 2, and transferring the material from the second place to a third place by a method as claimed in claim 3.

## Patentansprüche

1. Verfahren zum Fördern von Material unter Verwendung von Luft als Fördermedium, umfassend die wiederholten Schritte des
Förderns von Material von einem ersten Druckbehälter (A,B) durch den Druck von Druckluft;
Zurückbehaltens der Druckluft in dem ersten Druckbehälter (A,B) als Ersatz für das geförderte Material;
Nehmens der Druckluft, die nach dem einen Förderschritt zurückbehalten wurde, aus dem ersten Druckbehälter (A,B) und, während dies geschieht, Einführens weiteren Materials, das in einem späteren Förderschritt zu übertragen ist, in den ersten Druckbehälter (A,B); und
Einführens der zurückbehaltenen Druckluft aus dem ersten Druckbehälter (A,B) als Fördermedium in einen zweiten Druckbehälter (B,A), der das im nächsten Förderschritt zu fördernde Material enthält, wobei der Druck der zurückbehaltenen Druckluft auf das zu fördernde Medium einwirkt und die innere Energie der Druckluft Energie für den nächsten Förderschritt liefert;
wobei das weitere Material in den ersten Druckbehälter (A) von einem dritten Druckbehälter (D) durch den Druck der Druckluft eingeführt wird.

2. Verfahren nach Anspruch 1, umfassend den wiederholten Schritt des Förderns von Luft von einem dritten Druckbehälter (D) in einen vierten Druckbehälter (E), um Material in den dritten Druckbehälter (D) zu ziehen, und des Förderns der Luft vom vierten Druckbehälter in den dritten Druckbehälter, wobei das Material vom dritten Druckbehälter (D) ausgestoßen und das Material in den ersten oder zweiten Druckbehälter eingeführt wird.

3. Verfahren nach Anspruch 1, bei dem der erste Druckbehälter (H) anfänglich zu förderndes Material enthält, der zweite Druckbehälter (J) anfänglich Luft vom im wesentlichen Umgebungsdruck enthält, und ein weiterer Druckbehälter (K) anfänglich Druckluft enthält, wobei das Verfahren die zyklisch wiederholten Schritte des
Einführens von Material in den zweiten Druckbehälter (J), während die Luft aus diesem Behälter in den ersten Druckbehälter (H) gedrückt wird, und
Transports des Materials vom ersten Druckbehälter (H) durch den Druck der Druckluft aus dem weiteren Druckbehälter (K)
umfaßt,
nach welchen Schritten der zweite Druckbehälter (J) zu förderndes Material, der weitere Druckbehälter (K) Luft von im wesentlichen Umgebungsdruck enthält, und der erste Druckbehälter (H) Druckluft enthält.

4. Verfahren zum Transport von Material, umfassend ein Transportieren von Material von einem ersten Ort zu einem zweiten Ort durch ein Verfahren, wie in Anspruch 1 oder Anspruch 2 beansprucht, und ein Transportieren des Materials vom zweiten Ort zu einem dritten Ort durch ein Verfahren, wie in Anspruch 3 beansprucht.

## Revendications

1. Procédé de transfert d'un matériau utilisant de l'air en tant qu'agent de transfert, comprenant les étapes répétées consistant à :
transférer un matériau d'un premier réservoir sous pression (A, B) grâce à la pression de l'air comprimé,
conserver l'air comprimé dans ledit premier réservoir sous pression (A, B) en remplacement du matériau transféré,
prélever l'air comprimé conservé après ladite première étape de transfert à partir dudit premier réservoir sous pression (A, B) et, en faisant ainsi, introduire un matériau supplémentaire, qui sera transféré dans une étape de transfert ultérieure, jusque dans ledit premier réservoir sous pression (A, B), et
introduire l'air comprimé conservé depuis le premier réservoir sous pression (A, B), en tant que support de transfert jusque dans un second réservoir sous pression (B, A) contenant un matériau à transférer dans l'étape de transfert suivante, la pression dudit air comprimé agissant sur l'agent à transférer et l'énergie interne de l'air comprimé fournissant de l'énergie pour l'étape de transfert suivante,
dans lequel ledit matériau supplémentaire est introduit jusque dans ledit premier réservoir sous pression (A) à partir d'un troisième réservoir sous pression (D) par la pression de l'air comprimé.

2. Procédé selon la revendication 1, comprenant l'étape répétée consistant à transférer de l'air depuis un troisième réservoir sous pression (D) jusque dans un quatrième réservoir sous pression (E) de manière à aspirer le matériau jusque dans le troisième réservoir sous pression (D), et
transférer l'air provenant du quatrième réservoir sous pression jusque dans le troisième réservoir sous pression et évacuer ainsi le matériau du troisième réservoir sous pression (D) et introduire le matériau jusque dans le premier ou le second réservoir sous pression (A, B).

3. Procédé selon la revendication 1, dans lequel le premier réservoir sous pression (H) contient initialement un matériau à transférer, le second réservoir sous pression (J) contient initialement de l'air pratiquement à la pression ambiante, et un réservoir sous pression supplémentaire (K) contient initialement de l'air comprimé, le procédé comprenant les étapes répétées de façon cyclique consistant à :
introduire un matériau jusque dans le second réservoir sous pression (J) tout en comprimant l'air provenant de ce réservoir jusque dans le premier réservoir sous pression (H), et
transférer le matériau provenant du premier réservoir sous pression (H) grâce à la pression de l'air comprimé provenant du réservoir sous pression supplémentaire (K),
après lesquelles étapes, le second réservoir sous pression (J) contient un matériau à transférer, le réservoir sous pression supplémentaire (K) contient de l'air pratiquement à la pression ambiante, et le premier réservoir sous pression (H) contient de l'air comprimé.

4. Procédé de transfert d'un matériau, comprenant le transfert d'un matériau d'un premier emplacement à un second emplacement grâce à un procédé suivant la revendication 1 ou la revendication 2, et le transfert du matériau du second emplacement vers un troisième emplacement grâce à un procédé selon la revendication 3.
